# EUROPEAN PATENT SPECIFICATION

(11) **EP 2 878 124 B1**
(45) Date of publication and mention of the grant of the patent: **26.09.2018**
(21) Application number: 13740195.6
(22) Date of filing: 17.07.2013
(51) Int. Cl.: H04N 7/00

(54) **DEVICES AND METHODS FOR PROCESSING OF PARTITION MODE IN HIGH EFFICIENCY VIDEO CODING**
VORRICHTUNGEN UND VERFAHREN ZUR VERARBEITUNG VON TRENNMODI IN EINER HOCHEFFIZIENTEN VIDEOCODIERUNG
DISPOSITIF ET PROCÉDÉS DE TRAITEMENT DE MODE DE PARTITION DANS UN CODAGE VIDÉO À HAUTE EFFICACITÉ

(30) Priority: 27.07.2012 US 201261676809 P; 12.07.2013 US 201313940345
(43) Date of publication of application: 03.06.2015
(73) Proprietor: Google Technology Holdings LLC, Mountain View, CA 94043 (US)
(72) Inventor: KUNG, Wei-Ying, San Diego, California 92130 (US); FANG, Xue, San Diego, California 92127 (US)
(74) Representative: Openshaw & Co.
(86) International application number: PCT/US2013/050901
(87) International publication number: WO 2014/018341

(56) References cited:
- COBAN M ET AL: "AMP mode support for minimum CUs of size greater than 8x8", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0278, 2 July 2012 (2012-07-02), XP030112640,
- I-K KIM ET AL: "CE2: Test result of asymmetric motion partition (AMP)", 97. MPEG MEETING; 18-7-2011 - 22-7-2011; TORINO; (MOTION PICTURE EXPERT GROUP OR ISO/IEC JTC1/SC29/WG11),, no. m20805, 12 July 2011 (2011-07-12), XP030049368,
- ANONYMOUS: "High Efficiency Video Coding (HEVC) Test Model 5 (HM 5) Encoder Description", 98. MPEG MEETING;28-11-2011 - 2-12-2011; GENEVA; (MOTION PICTURE EXPERT GROUP OR ISO/IEC JTC1/SC29/WG11),, no. N12345, 2 March 2012 (2012-03-02), XP030018840,

## Description

### TECHNICAL FIELD

The present disclosure is related generally to video coding, and more specifically to systems, devices, and methods for providing a reduced number of bits to represent partition modes in certain instances for High Efficiency Video Coding ("HEVC").

### BACKGROUND

Video compression uses block processing for many operations. In block processing, a block of neighboring pixels is grouped into a coding unit, and compression operations treat this group of pixels as one unit to take advantage of correlations among neighboring pixels within the coding unit. Block-based processing often includes prediction coding and transform coding. Transform coding with quantization is a type of data compression which is commonly "lossy" as the quantization of a transform block taken from a source picture often discards data associated with the transform block in the source picture, thereby lowering its bandwidth requirement but often also resulting in quality loss in reproducing the original transform block from the source picture.

The Motion Picture Experts' Group Advanced Video Coding ("MPEG-4 AVC"), also known as H.264, is an established video-compression standard that uses transform coding in block processing. In H.264, a picture is divided into macroblocks ("MBs") of 16x16 pixels. Each MB is often further divided into smaller blocks. Blocks equal in size to or smaller than a MB are predicted using intra- or inter-picture prediction, and a spatial transform along with quantization is applied to the prediction residuals. The quantized transform coefficients of the residuals are commonly encoded using entropy coding methods (e.g., variable-length coding or arithmetic coding). Context Adaptive Binary Arithmetic Coding ("CABAC") was introduced in H.264 to provide a substantially lossless compression efficiency by combining an adaptive binary arithmetic coding technique with a set of context models. Context model selection plays a role in CABAC in providing a degree of adaptation and redundancy reduction. H.264 specifies two kinds of scan patterns over two-dimensional blocks. A zigzag scan is used for pictures coded with progressive video compression techniques, and an alternative scan is for pictures coded with interlaced video compression techniques.

HEVC, an international video-coding standard developed to succeed H.264, extends transform block sizes to 16x16 and 32x32 pixels to benefit high-definition video coding. HEVC may also use a variety of scan patterns including zigzag.

Within video-compression standards such as HEVC, coding mechanisms for reducing spatial and temporal redundancies are desirable. Ongoing efforts are directed at increasing the efficiencies of encoders and decoders ("codecs") which compress and decompress, respectively, video data streams. Because a purpose of codecs is to reduce the size of compressed digital video frames, thereby promoting the efficient storage and communication of video, development in codec hardware and in encoding and decoding processes continues.

### BRIEF DESCRIPTION OF THE SEVERAL VIEWS OF THE DRAWINGS

While the appended claims set forth the features of the present techniques with particularity, these techniques, together with their objects and advantages, may be best understood from the following detailed description taken in conjunction with the accompanying drawings of which:
Figure 1A is a video system in which the various embodiments of the disclosure may be used;
Figure 1B is a computer system on which embodiments of the disclosure may be implemented;
Figures 2A, 2B, 3A, and 3B illustrate certain video-encoding principles according to embodiments of the disclosure;
Figures 4A and 4B show possible architectures for an encoder and a decoder according to embodiments of the disclosure;
Figures 5A and 5B illustrate further video-coding principles according to embodiments of the disclosure;
Figure 6 illustrates certain video-encoding principles according to embodiments of the disclosure;
Figure 7 illustrates an example of a binarization table that describes bit assignment for partition modes according to an embodiment of the disclosure; and
Figure 8 illustrates an example of a binarization table that describes bit assignment for partition modes according to an embodiment of the disclosure.

### DETAILED DESCRIPTION

Turning to the drawings, wherein like reference numerals refer to like elements, techniques of the present disclosure are illustrated as being implemented in a suitable environment. The invention is set out in the appended set of claims; the further examples called embodiments in the description are illustrative examples, not embodiments claimed in the present application.

In this disclosure, the term "coding" refers to encoding that occurs at the encoder or decoding that occurs at the decoder. Similarly, the term coder refers to an encoder, a decoder, or a combined codec. The terms coder, encoder, decoder, and codec all refer to specific machines designed for the coding (encoding or decoding) of image or video data consistent with this disclosure. Image and video data generally consist of three components: one for a luma component which represents brightness of a pixel and two for chroma components which represent color information of a pixel.

The present discussion begins with a very brief overview of some terms and techniques known in the art of digital image compression. This overview is not meant to teach the known art in any detail. Those skilled in the art know how to find greater details in textbooks and in the relevant standards.

In an aspect of the present disclosure, a method is disclosed comprising: evaluating a single conditional statement once to determine if asymmetric motion partitioning ("AMP") may be used in a current coding tree block, and when an AMP flag indicates that AMP is not enabled, encoding or decoding a two-bit codeword for an inter-mode partition of the current coding tree block in a bitstream.

An example of a video system in which an embodiment of the disclosure may be used is now described. It is understood that elements depicted as function blocks in the figures may be implemented as hardware, software, or a combination thereof. Furthermore, embodiments of the disclosure may also be employed on other systems, such as on a personal computer, smartphone, or tablet computer.

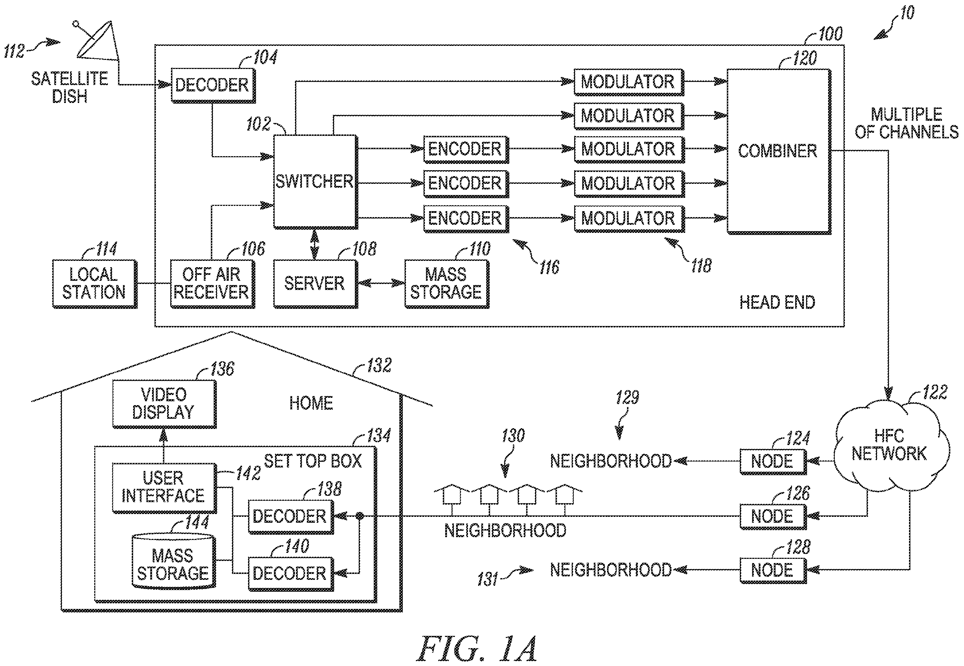

Referring to Figure 1A, a video system, generally labeled 10, may include a headend 100 of a cable-television network. The headend 100 may be configured to deliver video content to neighborhoods 129, 130, 131. The headend 100 may operate within a hierarchy of headends, with the headends higher in the hierarchy generally having greater functionality. The headend 100 may be communicatively linked to a satellite dish 112 and receive video signals for non-local programming from it. The headend 100 may also be communicatively linked to a local station 114 that delivers local programming to the headend 100. The headend 100 may include a decoder 104 that decodes the video signals received from the satellite dish 112, an off-air receiver 106 that receives the local programming from the local station 114, a switcher 102 that routes data traffic among the various components of the headend 100, encoders 116 that encode video signals for delivery to customers, modulators 118 that modulate signals for delivery to customers, and a combiner 120 that combines the various signals into a single, multichannel transmission.

The headend 100 may also be communicatively linked to a hybrid fiber cable ("HFC") network 122. The HFC network 122 may be communicatively linked to a plurality of nodes 124, 126, 128. Each of the nodes 124, 126, 128 may be linked by coaxial cable to one of the neighborhoods 129, 130, 131 and deliver cable television signals to that neighborhood. One of the neighborhoods 130 of Figure 1A is shown in more detail. The neighborhood 130 may include a number of residences, including a home 132. Within the home 132 may be a set-top box 134 communicatively linked to a video display 136. The set-top box 134 may include a first decoder 138 and a second decoder 140. The first and second decoders 138, 140 may be communicatively linked to a user interface 142 and to a mass-storage device 144. The user interface 142 may be communicatively linked to the video display 136.

During operation, headend 100 may receive local and non-local programming video signals from the satellite dish 112 and from the local station 114. The non-local programming video signals may be received in the form of a digital video stream, while the local programming video signals may be received as an analog video stream. In some embodiments, local programming may also be received as a digital video stream. The digital video stream may be decoded by the decoder 104 and sent to the switcher 102 in response to customer requests. The headend 100 may also include a server 108 communicatively linked to a mass-storage device 110. The mass-storage device 110 may store various types of video content, including video on demand ("VOD"), which the server 108 may retrieve and provide to the switcher 102. The switcher 102 may route local programming directly to the modulators 118, which modulate the local programming, and may route the non-local programming (including any VOD) to the encoders 116. The encoders 116 may digitally encode the non-local programming. The encoded non-local programming may then be transmitted to the modulators 118. The combiner 120 may be configured to receive the modulated analog video data and the modulated digital video data, combine the video data and transmit them via multiple radio frequency channels to the HFC network 122.

The HFC network 122 may transmit the combined video data to the nodes 124, 126, 128, which may retransmit the data to their respective neighborhoods 129, 130, 131. The home 132 may receive this video data at the set-top box 134, more specifically at the first decoder 138 and at the second decoder 140. The first and second decoders 138, 140 may decode the digital portion of the video data and provide the decoded data to the user interface 142, which then may provide the decoded data to the video display 136.

The encoders 116 and the decoders 138, 140 of Figure 1A (as well as all of the other steps and functions described herein) may be implemented as computer code comprising computer-readable instructions stored on a computer-readable storage device, such as memory or another type of storage device. The computer code may be executed on a computer system by a processor, such as an application-specific integrated circuit, or other type of circuit. For example, computer code for implementing the encoders 116 may be executed on a computer system (such as a server) residing in the headend 100. Computer code for the decoders 138, 140, on the other hand, may be executed on the set-top box 134, which constitutes a type of computer system. The code may exist as software programs comprising program instructions in source code, object code, executable code, or other formats. It should be appreciated that the computer code for the various components shown in Figure 1A may reside anywhere in system 10 or elsewhere (such as in a cloud network) that is determined to be desirable or advantageous. Furthermore, the computer code may be located in one or more components, provided the instructions may be effectively performed by the one or more components.

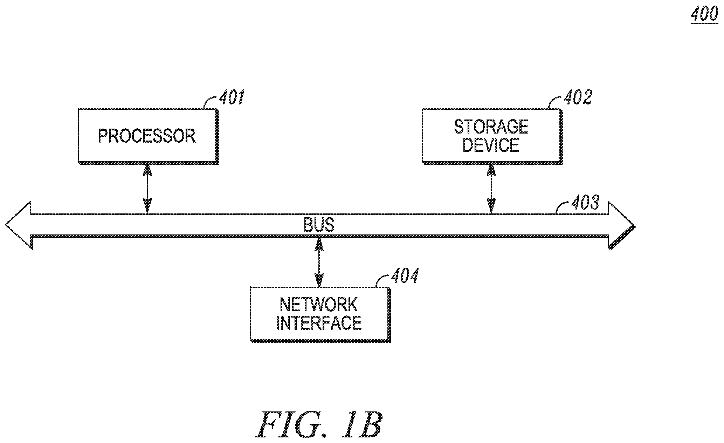

Figure 1B shows an example of a computer system on which computer code for the encoders 116 and the decoders 138, 140 may be executed. The computer system, generally labeled 400, includes a processor 401, or processing circuitry, that may implement or execute software instructions performing some or all of the methods, functions, and other steps described herein. Commands and data from processor 401 may be communicated over a communication bus 403, for example. Computer system 400 may also include a computer-readable storage device 402, such as random-access memory, where the software and data for processor 401 may reside during runtime. Storage device 402 may also include non-volatile data storage. Computer system 400 may include a network interface 404 for connecting to a network. Other known electronic components may be added to or substituted for the components depicted in the computer system 400. The computer system 400 may reside in the headend 100 and execute the encoders 116 and may also be embodied in the set-top box 134 to execute the decoders 138, 140. Additionally, the computer system 400 may reside in places other than the headend 100 and the set-top box 134 and may be miniaturized so as to be integrated into a smartphone or tablet computer.

Video encoding systems may achieve compression by removing redundancy in the video data, e.g., by removing those elements that can be discarded without greatly adversely affecting reproduction fidelity. Because video signals take place in time and space, most video encoding systems exploit both temporal and spatial redundancy present in these signals. Typically, there is high temporal correlation between successive frames. This is also true in the spatial domain for pixels which are close to each other. Thus, high compression gains are achieved by carefully exploiting these spatio-temporal correlations.

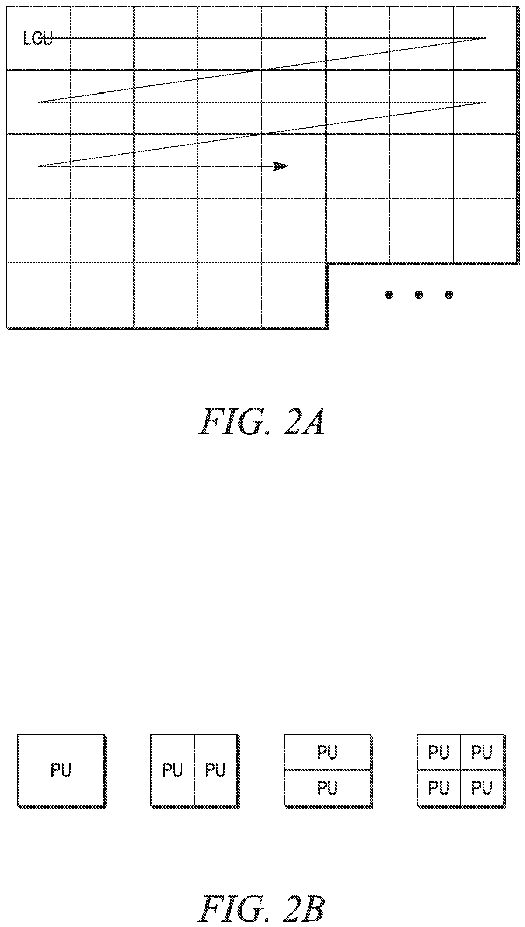

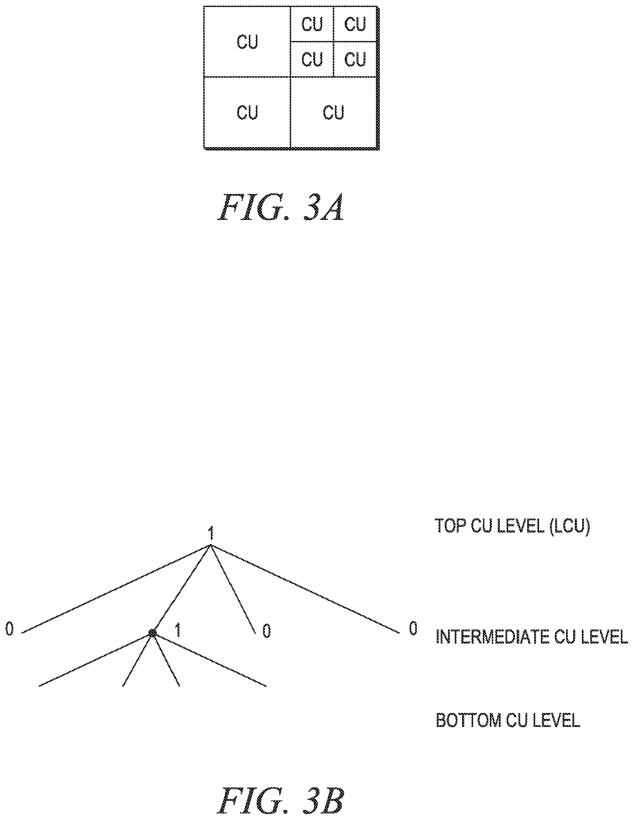

A high-level description of how video data are encoded and decoded by the encoders 116 and the decoders 138, 140 in an embodiment of the disclosure is now provided. In this embodiment, the encoders and decoders operate according to an HEVC method. HEVC is a block-based hybrid spatial and temporal predictive coding method. In HEVC, an input picture is first divided into square blocks, called "LCUs" (for largest coding units) or "CTBs" (for coding tree blocks), as shown in Figure 2A. Unlike other video-coding standards, in which the basic coding unit is a macroblock of 16x16 pixels, in HEVC, the LCU can be as large as 128x128 pixels. An LCU can be divided into four square blocks, called "CUs" (coding units), which are a quarter of the size of the LCU. Each CU can be further split into four smaller CUs, which are a quarter of the size of the original CU. The splitting process can be repeated until certain criteria are met. Figure 3A shows an example of LCU partitioned into CUs. In general, for HEVC, the smallest CU used (e.g., a leaf node as described in further detail below) is considered a CU.

How a particular LCU is split into CUs can be represented by a quadtree. At each node of the quadtree, a flag is set to "1" if the node is further split into sub-nodes. Otherwise, the flag is unset at "0." For example, the LCU partition of Figure 3A can be represented by the quadtree of Figure 3B. These "split flags" may be jointly coded with other flags in the video bitstream, including a skip-mode flag, a merge-mode flag, a predictive-unit ("PU") mode flag, and the like. In the case of the quadtree of Figure 3B, the split flags 10100 could be coded as overhead along with the other flags. Syntax information for a given CU may be defined recursively and may depend on whether the CU is split into sub-CUs.

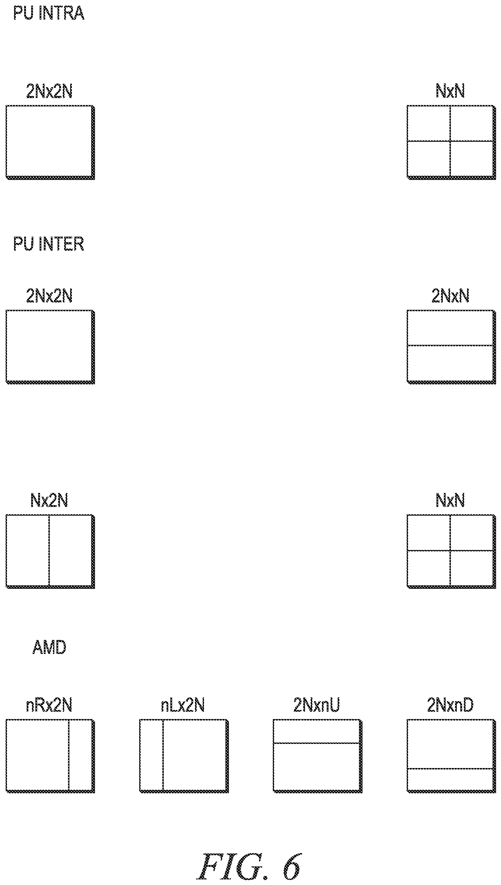

A node that is not split (e.g., a node corresponding to a terminal or "leaf' node in a given quadtree) may include one or more PUs. In general, a PU represents all or a portion of the corresponding CU and includes data for retrieving a reference sample for the PU for purposes of performing prediction for the CU. Thus, at each leaf of a quadtree, a CU of 2Nx2N can possess one of four possible patterns (NxN, Nx2N, 2NxN, and 2Nx2N), as shown in Figure 2B. While shown for a 2Nx2N CU, other PUs having different dimensions and corresponding patterns (e.g., square or rectangular) may be used, as shown in Figure 6. A CU can be either spatially or temporally predictively coded. If a CU is coded in intra-mode, each PU of the CU can have its own spatial prediction direction. If a CU is coded in inter-mode, each PU of the CU can have its own motion vectors and associated reference pictures. The data defining the motion vector may describe, for example, a horizontal component of the motion vector, a vertical component of the motion vector, a resolution for the motion vector (e.g., one-quarter pixel precision or one-eighth pixel precision), a reference frame to which the motion vector points, or a reference list (e.g., list 0 or list 1) for the motion vector. Additionally, a motion-vector predictor index may be used to identify a motion-vector predictor (e.g., motion vector ("MV") of left neighbor, MV of co-located neighbor). Data for the CU defining the one or more PUs of the CU may also describe, for example, partitioning of the CU into the one or more PUs. Partitioning modes may differ depending upon whether the CU is uncoded, intra-prediction mode encoded, or inter-prediction mode encoded.

In general, in intra-prediction encoding, a high level of spatial correlation is present between neighboring blocks in a frame. Consequently, a block can be predicted from the nearby encoded and reconstructed blocks, giving rise to the intra-prediction. In some embodiments, the prediction can be formed by a weighted average of the previously encoded samples, located above and to the left of the current block. The encoder may select the mode that minimizes the difference or cost between the original and the prediction and signals this selection in the control data.

In general, in inter-prediction encoding, video sequences have high temporal correlation between frames, enabling a block in the current frame to be accurately described by a region (or two regions in the case of bi-prediction) in the previously coded frames, which are known as reference frames. Inter-prediction utilizes previously encoded and reconstructed reference frames to develop a prediction using a block-based motion estimation and compensation technique.

Following intra-predictive or inter-predictive encoding to produce predictive data and residual data, and following any transforms (such as the 4x4 or 8x8 integer transform used in H.264/AVC or a discrete cosine transform ("DCT")) to produce transform coefficients, quantization of transform coefficients may be performed. In some embodiments, any transform operations may be bypassed using, e.g., a transform skip mode in HEVC. Quantization generally refers to a process in which transform coefficients are quantized to possibly reduce the amount of data used to represent the coefficients, e.g., by converting high-precision transform coefficients into a finite number of possible values. These steps are discussed in more detail below.

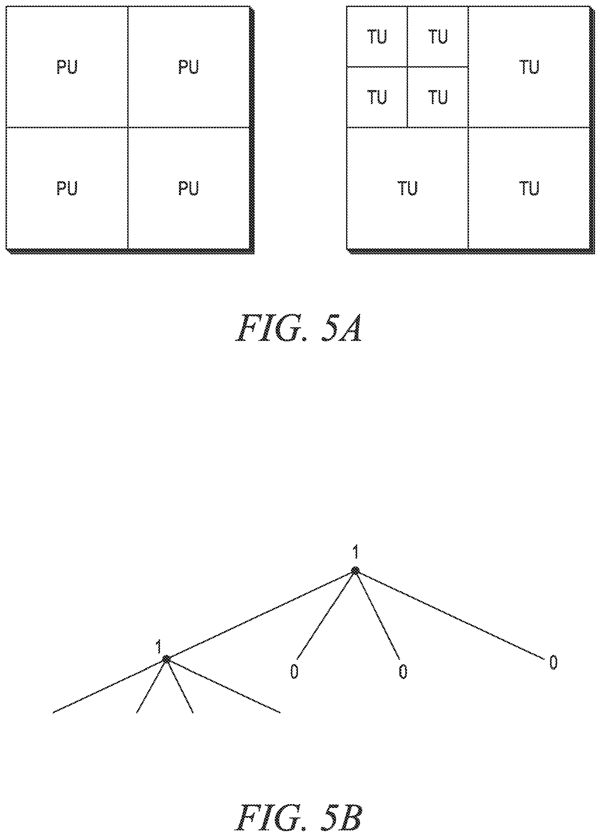

Each CU can also be divided into transform units ("TUs"). In some embodiments, a block-transform operation is performed on one or more TUs to decorrelate the pixels within the block and to compact the block energy into the low-order coefficients of the transform block. In some embodiments, one transform of 8x8 or 4x4 may be applied. In other embodiments, a set of block transforms of different sizes may be applied to a CU as shown in Figure 5A where the left block is a CU partitioned into PUs, and the right block is the associated set of TUs. The size and location of each block transform within a CU is described by a separate quadtree. Figure 5B shows the quadtree representation of TUs for the CU in the example of Figure 5A. In this example, 11000 is coded and transmitted as part of the overhead. As is appreciated, CUs, PUs, and TUs may be of NxN in size or MxN, where N≠M.

The TUs and PUs of any given CU may be used for different purposes. TUs are typically used for transformation, quantizing, and coding operations, while PUs are typically used for spatial and temporal prediction. There is not necessarily a direct relationship between the number of PUs and the number of TUs for a given CU.

Video blocks may comprise blocks of pixel data in the pixel domain or blocks of transform coefficients in the transform domain, e.g., following application of a transform, such as DCT, an integer transform, a wavelet transform, or a conceptually similar transform to residual data for a given video block, wherein the residual data represent pixel differences between video data for the block and predictive data generated for the block. In some cases, video blocks may comprise blocks of quantized transform coefficients in the transform domain, wherein, following application of a transform to residual data for a given video block, the resulting transform coefficients are also quantized. In video encoding, quantization is the step that introduces loss, so that a balance between bitrate and reconstruction quality can be established. These steps are discussed further below.

Block partitioning serves an important purpose in block-based video coding techniques. Using smaller blocks to code video data may result in better prediction of the data for locations of a video frame that include high levels of detail and may therefore reduce the resulting error (e.g., deviation of the prediction data from source-video data), represented as residual data. In general, prediction exploits the spatial or temporal redundancy in a video sequence by modeling the correlation between sample blocks of various dimensions, such that only a small difference between the actual and the predicted signal needs to be encoded. A prediction for the current block is created from the samples which have already been encoded. While potentially reducing the residual data, such techniques may, however, require additional syntax information to indicate how the smaller blocks are partitioned relative to a video frame and may result in an increased coded video bitrate. Accordingly, in some techniques, block partitioning may depend on balancing the desirable reduction in residual data against the resulting increase in bitrate of the coded video data due to the additional syntax information. Examples of video codecs using asymmetric block partitioning, also named AMP in the art are:
Coban et al. "AMP mode support for minimum CUs of size greater than 8x8",JCT-VC Meeting; 11-7-2012, Stockholm; and I-K Kim et al. "CE2: Test result of asymmetric motion partition (AMP)",97th MPEG Meeting, 18-7-2011, Torino.

In general, blocks and the various partitions thereof (e.g., sub-blocks) may be considered video blocks. In addition, a slice may be considered to be a plurality of video blocks (e.g., macroblocks or coding units) or sub-blocks (partitions of macroblocks or sub-coding units such as sub-blocks of PUs, TUs, etc.). Each slice may be an independently decodable unit of a video frame. Alternatively, frames themselves may be decodable units, or other portions of a frame may be defined as decodable units. Furthermore, a group of pictures may be defined as a decodable unit.

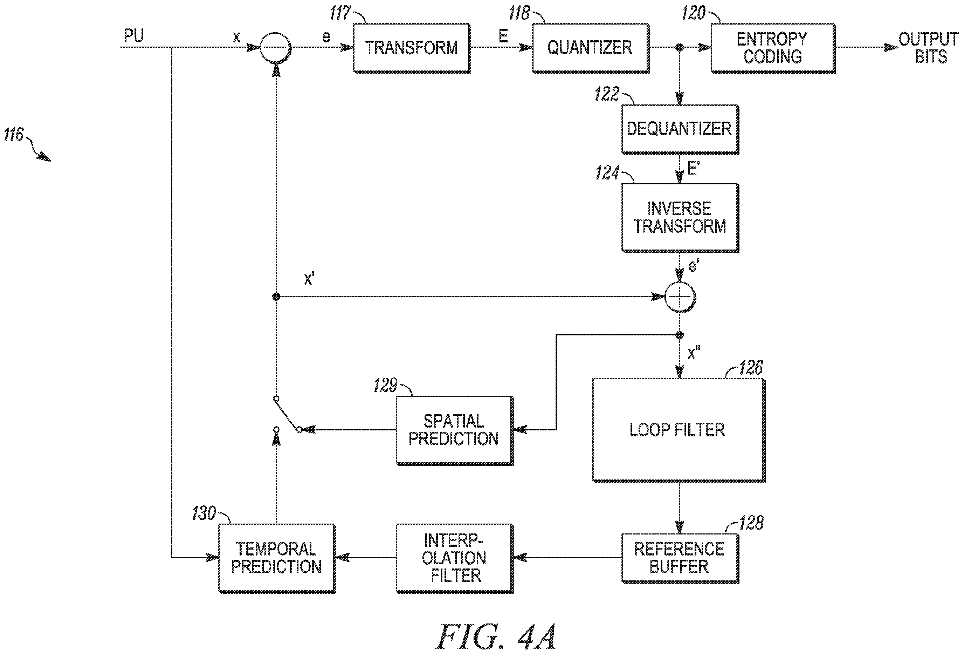

The encoders 116 of Figure 1A may be, according to an embodiment of the disclosure, composed of several functional modules as shown in Figure 4A. These modules may be implemented as hardware, software, or any combination of the two. Given a current PU, x, a prediction PU, x', may first be obtained through either spatial prediction or temporal prediction. This spatial or temporal prediction may be performed by a spatial-prediction module 129 or by a temporal-prediction module 130 respectively.

There are several possible spatial-prediction directions that the spatial-prediction module 129 can perform per PU, including horizontal, vertical, 45-degree diagonal, 135-degree diagonal, planar, etc. In general, spatial prediction may be performed differently for luma PUs and chroma PUs, for example, by luma intra-prediction modes and chroma intra-prediction modes. A syntax indicates the spatial-prediction direction per PU.

The encoder 116 may perform temporal prediction through a motion-estimation operation. Specifically, the temporal-prediction module 130 may search for a best match prediction for the current PU over reference pictures. The best match prediction may be described by a MV and by an associated reference picture ("refldx"). Generally, a PU in B pictures can have up to two MVs. Both MV and refldx may be part of the syntax in the bitstream.

The prediction PU may then be subtracted from the current PU, resulting in the residual PU, e. The residual CU, generated by grouping the residual PU, e, associated with the CU, may then be transformed by a transform module 117, one TU at a time, resulting in the residual PU in the transform domain, E. To accomplish this task, the transform module 117 may use, e.g., either a square or a non-square block transform.

The transform coefficients E may then be quantized by a quantizer module 118, converting the high-precision transform coefficients into a finite number of possible values. The quantization process may reduce the bit depth associated with some or all of the coefficients. For example, an n-bit value may be rounded down to an m-bit value during quantization, where n is greater than m. In some embodiments, external boundary conditions are used to produce modified transform coefficients. For example, a lower range or value may be used in determining if a transform coefficient is given a nonzero value or just zeroed out. As should be appreciated, quantization is a lossy operation, and the loss by quantization generally cannot be recovered.

The quantized coefficients may then be entropy coded by an entropy coding module 120, resulting in the final compression bits. The specific steps performed by the entropy coding module 120 are discussed below in more detail. It should be noted that the prediction, transform, and quantization described above may be performed for any block of video data, e.g., for a PU or TU of a CU or for a macroblock, depending on the specified coding standard.

To facilitate temporal and spatial prediction, the encoder 116 may also take the quantized transform coefficients E and dequantize them with a dequantizer module 122 resulting in the dequantized transform coefficients E'. The dequantized transform coefficients are then inverse transformed by an inverse-transform module 124, resulting in the reconstructed residual PU, e'. The reconstructed residual PU, e', is then added to the corresponding prediction, x', either spatial or temporal, to form a reconstructed PU, x".

A deblocking filter ("DBF") operation may be performed on the reconstructed PU, x', first to reduce blocking artifacts. A sample adaptive offset ("SAO") process may be conditionally performed after the completion of the deblocking filter process for the decoded picture, which compensates the pixel-value offset between reconstructed pixels and original pixels. In some embodiments, both the DBF operation and SAO process are implemented by adaptive loop-filter functions, which may be performed conditionally by a loop-filter module 126 over the reconstructed PU. In some embodiments, the adaptive loop-filter functions minimize the coding distortion between the input and output pictures. In some embodiments, loop-filter module 126 operates during an inter-picture prediction loop. If the reconstructed pictures are reference pictures, then they may be stored in a reference buffer 128 for future temporal prediction.

HEVC specifies two loop filters that are applied in order with the DBF applied first and the SAO filter applied afterwards. The DBF is similar to the one used by H.264/MPEG-4 AVC but with a simpler design and better support for parallel processing. In HEVC the DBF only applies to an 8x8 sample grid, while with H.264/MPEG-4 AVC the DBF applies to a 4x4 sample grid. DBF uses an 8x8 sample grid since it causes no noticeable degradation and significantly improves parallel processing because the DBF no longer causes cascading interactions with other operations. Another change is that HEVC only allows for three DBF strengths of 0 to 2. HEVC also requires that the DBF first apply horizontal filtering for vertical edges to the picture, and only after that does it apply vertical filtering for horizontal edges to the picture. This allows for multiple parallel threads to be used for the DBF.

The SAO filter process is applied after the DBF and is made to allow for better reconstruction of the original signal amplitudes by using e.g., a look-up table that includes some parameters that are based on a histogram analysis made by the encoder. The SAO filter has two basic types which are the edge offset ("EO") type and the band offset ("BO") type. One of the SAO types can be applied per CTB. The EO type has four sub-types corresponding to processing along four possible directions (e.g., horizontal, vertical, 135 degree, and 45 degree). For a given EO sub-type, the EO processing operates by comparing the value of a pixel to two of its neighbors using one of four different gradient patterns. An offset is applied to pixels in each of the four gradient patterns. For pixel values that are not in one of the gradient patterns, no offset is applied. The BO processing is based directly on the sample amplitude which is split into 32 bands. An offset is applied to pixels in 16 of the 32 bands, where a group of 16 bands corresponds to a BO sub-type. The SAO filter process was designed to reduce distortion compared to the original signal by adding an offset to sample values. It can increase edge sharpness and reduce ringing and impulse artifacts.

In an embodiment of the disclosure, intra-pictures (such as an I picture) and inter-pictures (such as P pictures or B pictures) are supported by the encoder 116. An intra-picture may be coded without referring to other pictures. Hence, spatial prediction may be used for a CU/PU inside an intra-picture. An intra-picture provides a possible point where decoding can begin. On the other hand, an inter-picture generally aims for high compression. An inter-picture supports both intra- and inter-prediction. A CU/PU in an inter-picture is either spatially or temporally predictively coded. Temporal references are the previously coded intra- or inter-pictures.

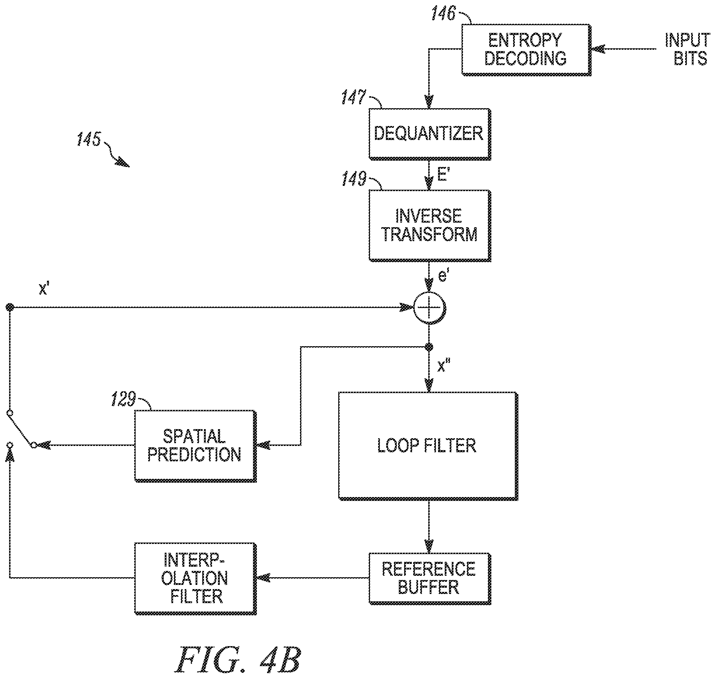

When the decoders 138, 140 receive the bitstream, they perform the functions shown in Figure 4B. An entropy-decoding module 146 of the decoder 145 may decode the sign values, significance map, and non-zero coefficients to recreate the quantized and transformed coefficients. In decoding the significance map, the entropy-decoding module 146 may perform the reverse of the procedure described in conjunction with the entropy-coding module 120, decoding the significance map along a scanning pattern made up of scanning lines. The entropy-decoding module 146 then may provide the coefficients to a dequantizer module 147, which dequantizes the matrix of coefficients, resulting in E'. The dequantizer module 147 may provide the dequantized coefficients to an inverse-transform module 149. The inverse-transform module 149 may perform an inverse-transform operation on the coefficients resulting in e'. Filtering and spatial prediction may be applied in a manner described in conjunction with Figure 4A.

As is known by those of skill in the art, encoders operate by encoding slices of a video stream. As mentioned above, a slice may be considered to be a plurality of video blocks or sub-blocks. Each slice may be an independently or dependently decodable unit of a video frame.

Referring now to Figure 6, certain video-encoding principles according to embodiments of the disclosure are shown. Specifically, different coding structures for PUs are shown. For intra-coding, square PUs of dimensions 2Nx2N and NxN may be used. For inter-coding, PUs of dimensions 2Nx2N, 2NxN, nx2N, NxN, and AMP may be used. As explained above, if a PU is encoded in intra-mode, each PU can have its own spatial-prediction direction. If a PU is encoded in inter-mode, each PU can have its own motion vectors and associated reference pictures.

AMP partitions include nRx2N, nLx2N, 2NxnU, and 2NxnD where R refers to "right,", L refers to "left," U refers to "up," and D refers to "down." In AMP, the partition generally occurs such that ¾ of the block is on one side of the partition, and ¼ of the block is on the other side of the partition. AMP may be generally signaled by a flag such as "amp_enabled_flag." Encoders 116 may use flag amp_enabled_flag that indicates whether or not AMP may be used in coding tree blocks. An amp_enabled_flag equal to 1 may specify that asymmetric motion partitions, e.g., PartMode equal to PART_2NxnU, PART_2NxnD, PART_nLx2N, or PART_nRx2N, may be used in coding tree blocks. An amp_enabled_flag equal to 0 may specify that asymmetric motion partitions cannot be used in coding tree blocks.

In some embodiments, the flag amp_enabled_flag is set by user input and located in a sequence parameter set header.

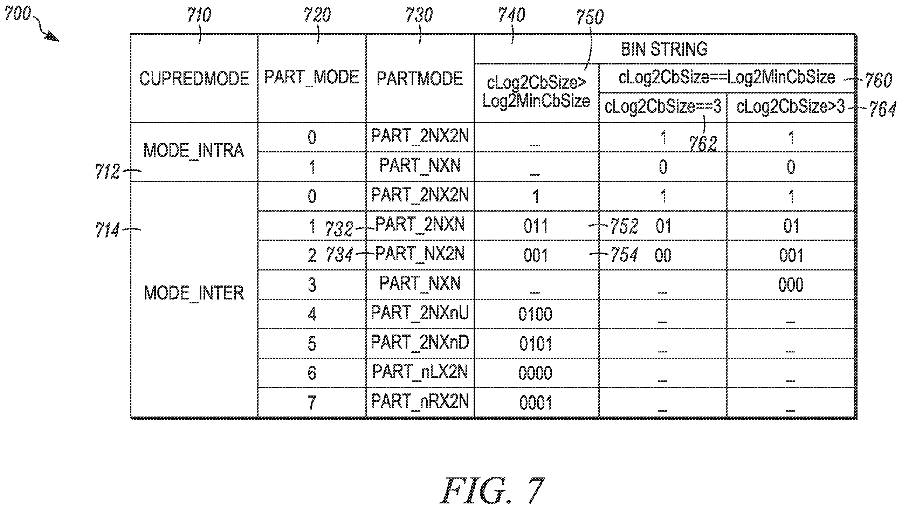

Figure 7 illustrates an example binarization table 700 that describes bit assignment for partition modes in current HEVC. Binarization table 700 includes the categories CuPredMode 710, part_mode 720, PartMode 730, and Bin string 740. CuPredMode 710 further includes sub-categories MODE_INTRA 712 and MODE_INTER 714. Bin string 740 further includes the sub-categories cLog2CbSize>Log2MinCbSize 750 and cLog2CbSize==Log2MinCbSize 760. cLog2CbSize==Log2MinCbSize 760 further includes the sub-categories cLog2CbSize==3 762 and cLog2CbSize>3 764. Binarization table 700 governs how encoders 116 encode the CU header and how decoders 138, 140 decode the CU header.

CuPredMode 710 refers to the inter- or inter-prediction mode of the current CU. MODE_INTRA 712 and MODE_INTER 714 refer to intra-mode and inter-mode, respectively.

Input to the PartMode process includes a luma location (xC, yC) specifying the top-left sample of the current luma coding block relative to the top-left luma sample of the current picture and a variable cLog2CbSize specifying the current luma coding block size.

Output of this process is the binarization of the syntax element, as shown in columns 750, 762, 764. The binarization for PartMode 730 is given by table 700 depending on CuPredMode[xC][yC] 710 and cLog2CbSize.

At PartMode 730, a part mode flag may specify the partitioning mode of the current coding unit. Part_mode 720 refers to value of the partition mode. PartMode 730 and Part_mode 720 generally refer to the same things with different representations. For example, PartMode 730 is an interpolation to a human being, while Part_mode 720 is a digit value to a machine. The semantics of part mode depend on CuPredMode[x0][y0] 710. The value of part_mode may be restricted as follows:
- If CuPredMode[x0][y0] is equal to MODE_INTRA, then part_mode shall be equal to 0 or 1.
- Otherwise (CuPredMode[x0][y0] is equal to MODE_INTER), then the following applies:
   ∘ If log2CbSize is greater than Log2MinCbSizeY and amp_enabled_flag is equal to 1, then part_mode shall be in the range of 0 to 2, inclusive, and in the range of 4 to 7, inclusive.
   ∘ Otherwise, if log2CbSize is greater than Log2MinCbSizeY and amp_enabled_flag is equal to 0, then part_mode shall be in the range of 0 to 2, inclusive.
   ∘ Otherwise, if log2CbSize is equal to 3, then the value of part_mode shall be in the range of 0 to 2, inclusive.
   ∘ Otherwise (log2CbSize is greater than 3), the value of part_mode shall be in the range of 0 to 3, inclusive.

When PredMode is Mode_INTRA and log2CbSize is greater than Log2MinCbSizeY, then PartMode is inferred to be equal to PART_2Nx2N.

In current HEVC, the partition modes PART_2NxN 732 and PART_Nx2N 734 always consume three bits when the current CU size is greater than the minimum CU size, as shown by codeword 011 (item 752) and codeword 001 (item 754). For bit-saving purposes, the actual binarization of partition modes PART_2NxN 732 and PART_Nx2N 734 depends on the AMP flag. That is, if AMP is off, only two bits may need to be generated.

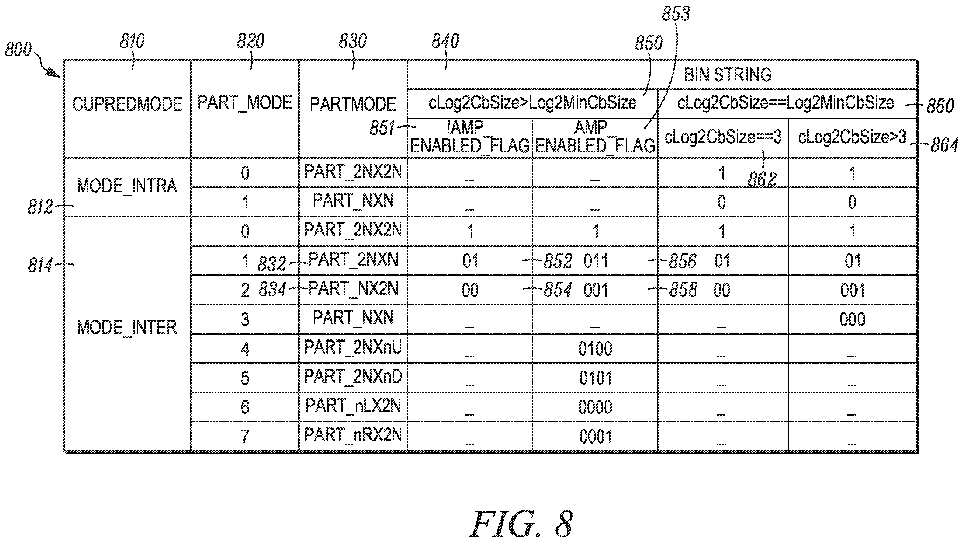

Figure 8 illustrates an example binarization table 800 that describes bit assignment for partition modes in HEVC, which corrects for AMP. Binarization table 800 includes the categories CuPredMode 810, part_mode 820, PartMode 830, and Bin string 840. CuPredMode 810 further includes sub-categories MODE_INTRA 812 and MODE_INTER 814. Bin string 840 further includes the sub-categories cLog2CbSize>Log2MinCbSize 850 and cLog2CbSize==Log2MinCbSize 860. cLog2CbSize==Log2MinCbSize 860 further includes the sub-categories cLog2CbSize==3 862 and cLog2CbSize>3 864. cLog2CbSize>Log2MinCbSize 850 further includes the sub-categories !amp_enabled_flag 851 and amp_enabled_flag 853.

As described above, amp_enabled_flag 853 equal to 1 specifies that AMP, e.g., PartMode equal to PART_2NxnU, PART_2NxnD, PART_nLx2N, or PART_nRx2N, may be used in coding tree blocks, and amp_enabled_flag equal to 0 (or !amp_enabled_flag 851 equal to 1) specifies that AMP is not used in coding tree blocks. Binarization table 800 governs how encoders 116 encode the CU header and how decoders 138, 140 decode the CU header.

CuPredMode 810 refers to the intra- or inter-prediction mode of the current CU. MODE_INTRA 812 and MODE_INTER 814 refer to intra-mode and inter-mode, respectively.

At PartMode 830, a part mode flag may specify the partitioning mode of the current coding unit. Part_mode 820 refers to the value of the partition mode.

In Figure 8, the partition modes PART_2NxN 832 and PART_Nx2N 834 consume either two or three bits when the current CU size is greater than the minimum CU size, as shown by items 852, 854, 856, 858, and depending on whether AMP is enabled or not. For example, if the flag amp_enabled_flag is disabled (or !amp_enabled_flag 851 is equal to 1), then encoders 116 encode codewords having two bits for partition modes PART_2NxN 832 and PART_Nx2N 834 as shown by items 852, 854 in the encoded bitstream. However, if the flag amp_enabled_flag 853 is enabled (equal to 1), then encoders 116 encode codewords having three bits for partition modes PART_2NxN 832 and PART_Nx2N 834 as shown by items 856, 858 in the encoded bitstream. In other words, if AMP is on or enabled for PART_2NxN 832, then item 856 is assigned codeword 011. If AMP is off or not enabled for PART_2NxN 832, then item 852 is assigned codeword 01. If AMP is on or enabled for PART_Nx2N 834, then item 858 is assigned codeword 001. If AMP is off or not enabled for PART_Nx2N 834, then item 854 is assigned codeword 00.

Taking CU size into consideration, the following may be derived for an Inter CU with MODE_INTER 814 from Table 800:
- For partition mode PART_2Nx2N, the codeword is always 1.
- For partition mode PART_2NxN, if AMP is off or CU = minCU, then the codeword is 01.
- For partition mode PART_2NxN, if AMP is on and CU > minCU, then the codeword is 011.
- For partition mode PART_Nx2N, if AMP is off or minCU = 8x8, then the codeword is 00.
- For partition mode PART_Nx2N, if AMP is on or minCU > 8x8, then the codeword is 001.
- For partition mode PART_NxN, if minCU > 8x8, then the codeword is always 000.

In view of the many possible embodiments to which the principles of the present discussion may be applied, it should be recognized that the embodiments described herein with respect to the drawing figures are meant to be illustrative only and should not be taken as limiting the scope of the claims. Therefore, the techniques as described herein contemplate all such embodiments as may come within the scope of the following claims and equivalents thereof.

## Claims

1. A method comprising:
evaluating, by a computing device (400), a single conditional statement once that determines if asymmetric motion partitioning ("AMP") may be used in a current coding tree block; and
based on the evaluating of the single conditional statement, when an AMP flag (851, 853) indicates that AMP is not enabled and the current coding tree block has a current coding tree block size that is greater than the current minimum coding tree block size, encoding or decoding, by the computing device (400), a two-bit codeword (852, 854) for an inter-mode partition of the current coding tree block in a bitstream.

2. The method of claim 1 wherein the inter-mode partition is a PART_2NxN.

3. The method of claim 2 wherein the codeword is 01.

4. The method of claim 1 or claim 2 wherein the minimum coding tree block size is 8x8.

5. The method of claim 1 wherein the inter-mode partition is a PART_Nx2N.

6. The method of claim 5 wherein the codeword is 00.

7. The method of claim 1 wherein the AMP flag is located in a sequence parameter set header.

8. The method of claim 1 wherein when the AMP flag indicates that AMP is enabled, encoding or decoding, by the computing device, a three-bit codeword for an inter-mode partition of the current coding tree block in a bitstream.

9. The method of claim 8 wherein the inter-mode partition is a PART_2NxN.

10. The method of claim 9 wherein the codeword is 011.

11. The method of claim 8 wherein the inter-mode partition is a PART_Nx2N.

12. The method of claim 11 wherein the codeword is 001.

13. A decoder (138, 140) comprising:
one or more computer processors (401); and
a non-transitory computer-readable storage medium (402) comprising instructions that, when executed, control the one or more computer processors (401) to be configured for:
determining an encoded bitstream;
evaluating, by the one or more computer processors (401), a single conditional statement once that determines if asymmetric motion partitioning ("AMP") may be used in a current coding tree block; and
based on the evaluating of the single conditional statement, when an AMP flag (851, 853) indicates that AMP is not enabled and the current coding tree block has a current coding tree block size that is greater than the current minimum coding tree block size, decoding a two-bit codeword (852, 854) for an inter-mode partition of the current coding tree block from the bitstream.

14. An encoder (116) comprising:
one or more computer processors (401); and
a non-transitory computer-readable storage medium (402) comprising instructions that, when executed, control the one or more computer processors (401) to be configured for:
evaluating, by the one or more computer processors (401), a single conditional statement once that determines if asymmetric motion partitioning ("AMP") may be used in a current coding tree block; and
based on the evaluating of the single conditional statement, when an AMP flag (851, 853) indicates that AMP is not enabled and the current coding tree block has a current coding tree block size that is greater than the current minimum coding tree block size, encoding a two-bit codeword (852, 854) for an inter-mode partition of the current coding tree block in a bitstream.

## Patentansprüche

1. Verfahren, umfassend:
einmaliges Beurteilen, durch ein Computergerät (400), einer einzelnen bedingten Anweisung, die ermittelt, ob asymmetrische Bewegungspartitionierung ("AMP") bei einem aktuellen Codierbaumblock verwendet werden kann; und
auf Basis der Beurteilung der einzelnen bedingten Anweisung, wenn ein AMP-Flag (851, 853) angibt, dass AMP nicht aktiviert ist und der aktuelle Codierbaumblock eine aktuelle Codierbaumblock-Größe hat, die größer ist als die aktuelle minimale Codierbaumblock-Größe, Codieren oder Decodieren, durch das Computergerät (400), eines Zwei-Bit-Codeworts (852, 854) für eine intermodale Partition des aktuellen Codierbaumblocks in einen Bitstrom.

2. Verfahren nach Anspruch 1, wobei die intermodale Partition ein PART_2NxN ist.

3. Verfahren nach Anspruch 2, wobei das Codewort 01 ist.

4. Verfahren nach Anspruch 1 oder Anspruch 2, wobei die minimale Codierbaumblock-Größe 8x8 beträgt.

5. Verfahren nach Anspruch 1, wobei die intermodale Partition ein PART_Nx2N ist.

6. Verfahren nach Anspruch 5, wobei das Codewort 00 ist.

7. Verfahren nach Anspruch 1, wobei das AMP-Flag sich in einem Sequenzparametersatz-Header befindet.

8. Verfahren nach Anspruch 1, wobei, wenn das AMP-Flag angibt, dass AMP aktiviert ist, das Drei-Bit-Codewort durch das Computergerät für eine intermodale Partition des aktuellen Codierbaumblocks in einen Bitstrom codiert oder decodiert wird.

9. Verfahren nach Anspruch 8, wobei die intermodale Partition ein PART_2NxN ist.

10. Verfahren nach Anspruch 9, wobei das Codewort 011 ist.

11. Verfahren nach Anspruch 8, wobei die intermodale Partition ein PART_Nx2N ist.

12. Verfahren nach Anspruch 11, wobei das Codewort 001 ist.

13. Decoder (138, 140), umfassend:
einen oder mehrere Computerprozessoren (401); und
ein nicht flüchtiges computerlesbares Speichermedium (402), das Anweisungen umfasst, die bei Ausführung den einen oder die mehreren Computerprozessoren (401) steuern, konfiguriert zu sein zum:
Ermitteln eines codierten Bitstroms;
einmaligen Beurteilen, durch den einen oder die mehreren Computerprozessoren (401), einer einzelnen bedingten Anweisung, die ermittelt, ob asymmetrische Bewegungspartitionierung ("AMP") bei einem aktuellen Codierbaumblock verwendet werden kann; und
auf Basis der Beurteilung der einzelnen bedingten Anweisung, wenn ein AMP-Flag (851, 853) angibt, dass AMP nicht aktiviert ist und der aktuelle Codierbaumblock eine aktuelle Codierbaumblock-Größe hat, die größer ist als die aktuelle minimale Codierbaumblock-Größe, Decodieren eines Zwei-Bit-Codeworts (852, 854) für eine intermodale Partition des aktuellen Codierbaumblocks aus dem Bitstrom.

14. Encoder (116), umfassend:
einen oder mehrere Computerprozessoren (401); und
ein nicht flüchtiges computerlesbares Speichermedium (402), das Anweisungen umfasst, die bei Ausführung den einen oder die mehreren Computerprozessoren (401) steuern, konfiguriert zu sein zum:
einmaligen Beurteilen, durch den einen oder die mehreren Computerprozessoren (401), einer einzelnen bedingten Anweisung, die ermittelt, ob asymmetrische Bewegungspartitionierung ("AMP") bei einem aktuellen Codierbaumblock verwendet werden kann; und
auf Basis der Beurteilung der einzelnen bedingten Anweisung, wenn ein AMP-Flag (851, 853) angibt, dass AMP nicht aktiviert ist und der aktuelle Codierbaumblock eine aktuelle Codierbaumblock-Größe hat, die größer ist als die aktuelle minimale Codierbaumblock-Größe, Codieren eines Zwei-Bit-Codeworts (852, 854) für eine intermodale Partition des aktuellen Codierbaumblocks in einen Bitstrom.

## Revendications

1. Procédé comprenant :
l'évaluation, par un dispositif informatique (400), d'une seule instruction conditionnelle une fois qui détermine si un partitionnement à mouvement asymétrique ("AMP") peut être utilisé dans un bloc d'arborescence de codage courant ; et
basé sur l'évaluation de l'instruction conditionnelle unique, lorsqu'un indicateur AMP (851,853) indique que l'AMP n'est pas validé et que le bloc d'arborescence de codage courant a une taille de bloc d'arborescence de codage courant supérieure à la taille de bloc d'arborescence de codage minimale courante, le codage ou le décodage, par le dispositif de calcul (400), d'un mot de code à deux bits (852, 854) pour une partition inter-mode du bloc d'arborescence de codage courant dans un train de bits.

2. Procédé selon la revendication 1, dans lequel la partition inter-mode est un PART_2NxN.

3. Procédé selon la revendication 2, dans lequel le mot de code est 01.

4. Procédé selon la revendication 1 ou la revendication 2, dans lequel la taille minimale du bloc d'arborescence de codage est 8x8.

5. Procédé selon la revendication 1, dans lequel la partition inter-mode est un PART_Nx2N.

6. Procédé selon la revendication 5, dans lequel le mot de code est 00.

7. Procédé selon la revendication 1, dans lequel le drapeau AMP est situé dans un en-tête d'un ensemble de paramètres de séquence.

8. Procédé selon la revendication 1, dans lequel lorsque le drapeau AMP indique que l'AMP est validé, le codage ou le décodage, par le dispositif informatique, d'un mot de code à trois bits pour une partition inter-mode du bloc d'arborescence de codage courant dans un train de bits.

9. Procédé selon la revendication 8, dans lequel la partition inter-mode est un PART_2NxN.

10. Procédé selon la revendication 9, dans lequel le mot de code est 011.

11. Procédé selon la revendication 8, dans lequel la partition inter-mode est un PART_Nx2N.

12. Procédé selon la revendication 11, dans lequel le mot de code est 001.

13. Décodeur (138, 140) comprenant :
un ou plusieurs processeurs informatiques (401) ; et
un support de stockage non transitoire lisible par ordinateur (402) comprenant des instructions qui, lorsqu'elles sont exécutées, commandent le ou les processeurs informatiques (401) devant être configurés pour :
la détermination d'un train de bits codé ;
l'évaluation, par le ou les processeurs d'ordinateur (401), d'une seule instruction conditionnelle une fois qui détermine si un partitionnement à mouvement asymétrique ("AMP") peut être utilisé dans un bloc d'arborescence de codage courant ; et
basé sur l'évaluation de l'instruction conditionnelle unique, lorsqu'un indicateur AMP (851,853) indique que l'AMP n'est pas validé et que le bloc d'arborescence de codage courant a une taille de bloc d'arborescence de codage courante supérieure à la taille de bloc d'arborescence de codage minimale courante, le décodage d'un mot de code à deux bits (852, 854) pour une partition inter-mode du bloc d'arborescence de codage courant à partir du train de bits.

14. Codeur (116) comprenant :
un ou plusieurs processeurs informatiques (401) ; et
un support de stockage non transitoire lisible par ordinateur (402) comprenant des instructions qui, lorsqu'elles sont exécutées, commandent le ou les processeurs informatiques (401) devant être configurés pour :
l'évaluation, par le ou les processeurs d'ordinateur (401), d'une seule instruction conditionnelle une fois qui détermine si un partitionnement à mouvement asymétrique ("AMP") peut être utilisé dans un bloc d'arborescence de codage courant ; et
basé sur l'évaluation de l'instruction conditionnelle unique, lorsqu'un indicateur AMP (851, 853) indique que l'AMP n'est pas validé et que le bloc d'arborescence de codage courant a une taille de bloc d'arborescence de codage courante supérieure à la taille de bloc d'arborescence de codage minimale courante, le codage d'un mot de code à deux bits (852, 854) pour une partition inter-mode du bloc d'arborescence de codage courant dans un train de bits.
